# EUROPÄISCHE PATENTANMELDUNG

(11) **EP 2 251 555 A1**
(43) Veröffentlichungstag der Anmeldung: **17.11.2010**
(21) Anmeldenummer: 10004480.9
(22) Anmeldetag: 28.04.2010
(51) Int. Cl.: F16B 13/12

(54) **Dübel**

(30) Priorität: 29.04.2009 DE 102009019111
(71) Anmelder: Bilz, Sonja Maria, 61130 Nidderau (DE)
(72) Erfinder: Bilz, Sonja Maria, 61130 Nidderau (DE)
(74) Vertreter: Tergau & Pohl Patentanwälte

(57) **Zusammenfassung**

Ein Dübel (1) mit einem im Wesentlichen als Zylinder ausgebildeten Dübelkörper (2) mit einem Innenkanal (10) soll eine besonders hohe Spreizkraft im Bohrloch erreichen, kostengünstig herzustellen sein und die Verwendung von Gewindeschrauben, insbesondere Gewindestangen, mit einer an den Dübel und an das zu befestigende Element anzupassenden Länge ermöglichen.

Dazu ist erfindungsgemäß vorgesehen, dass
- der Dübelkörper eine Anzahl von Ausnehmungen mit einseitig angeordneten Spreizkrallen (6), die radial nach außen um die als Achse dienende Befestigung der Spreizkralle (6) am Dübelkörper frei bewegbar sind, aufweist,
- der Innenkanal eine Anzahl oder Teile von Gewindegängen aufweist, die in Größe und Position der Ganghöhe einer zugeordneten Gewindeschraube oder eines zugeordneten Gewindestabes entsprechen,
- der Durchmesser des Innenkanals an den Durchmesser der zugeordneten Schraube oder des Gewindestabes angepasst ist,
- die Spreizkrallen (6) auf ihrer Innenseite Verdickungen (12,12',12'') aufweisen.

## Beschreibung

Die Erfindung bezieht sich auf einen Dübel mit einem im Wesentlichen als Zylinder ausgebildeten Dübelkörper mit einem Innenkanal.

Als Dübel wird meist ein Bauelement bezeichnet, welches zur Befestigung einer Schraube oder eines Gegenstandes an einer Mauer, einer (Raum-)Decke, einem (Fuß-)Boden oder auch an sonstigen Flächen - beispielsweise außerhalb eines Gebäudes im Freien - verwendet wird und in den meisten Fällen als Spreizdübel ausgebildet ist.

Die DE 100 52 662 A1 beschreibt einen Spreizdübel mit einer eindrehbaren Spreizschraube, der mindestens einen Längsschlitz aufweist und mit einem Innengewinde versehen ist, in das die Spreizschraube eindrehbar ist, und so ausgebildet ist, dass das Innengewinde zumindest einen Bereich aufweist, dessen Gewindedurchmesser gleichbleibend kleiner ist als der Gewindedurchmesser der Spreizschraube, bei gleicher Gewindesteigung.

Aus der DE 3101472 A1 ist ein Spreizdübel bekannt, der einen über den größten Teil seiner Länge verlaufenden Schlitz aufweist, durch den zwei Spreizschenkel gebildet werden. Ein in Richtung der Dübelachse verlaufender Aufnahmekanal erweitert sich in einen zylindrischen Teil, in den sich der Anfangsteil einer Schraube einschieben läßt, ohne dass dabei der Dübel bereits gespreizt wird. Im Bereich dieses zylindrischen Kanalteiles sind an der Dübelinnenwand zwei Erhebungen angeformt, die in Dübellängsrichtung entsprechend der Steigung des Gewindes einer Befestigungsschraube versetzt angeordnet sind, so dass sie sich in das Gewinde der Befestigungsschraube einschrauben lassen, ohne dass dabei auf den Dübel eine wesentliche Krafteinwirkung erfolgt. Durch die Erhebungen kann der Dübel mit der Befestigungsschraube verbunden werden, so dass er sich mit Hilfe der Befestigungsschraube in ein Bohrloch einschieben läßt.

Die DE 10 2004 025 409 A1 legt die Funktionsweise eines aus Kunststoff gefertigten Dübels offen mit außenliegenden Stacheln oder Stiften, vorzugsweise im schrägen Winkel angeordnet, die sich beim Einstecken des Dübels in ein Bohrloch anlegen und bei Zugkraft versuchen, sich aufzurichten und dabei gegen das Bohrloch pressen.

Es gibt noch weitere Ausführungen eines Dübels. Die so genannten Verbundanker sind im Regelfall bauaufsichtlich zugelassen und daher auch für höher belastete Verbindungen geeignet. Handelsüblich sind Zweikomponenten-Reaktionsharze in einer Glasampulle, der durch eine Ankerstange im Bohrloch zerstört und durch definiertes Drehen der Ankerstange vermischt wird. Das Harz füllt den Hohlraum zwischen Bohrloch und Ankerstange, dringt teilweise in die Poren des umgebenden Mauerwerks oder Betons, härtet zeit- und temperaturabhängig aus und verklebt die Ankerstange mit der Bohrlochwand. Solche Anker funktionieren ohne Spreizung bzw. Vorspannung und vermeiden so beim Setzen der Ankerstange eine mögliche Rissbildung im umgebenden Baustoff durch hohe Spreizkräfte. Neben dem Glaspatronensystem gibt es auch ein Injektionssystem, bei dem der Mörtel bestehend aus Harz und Härter mit einem Auspressgerät in das Bohrloch injiziert wird. Die Verwendung der genannten Systeme muss gemäß den bauaufsichtlichen Zulassungen erfolgen. Es gibt auch Verbundanker, die in der gerissenen Zugzone eines Betonbauteils verwendet werden dürfen, da sie eine sogenannte Spreizreserve besitzen.

Der so genannte Schraubendübel besteht typischerweise aus Polyamid und ist von der Funktion her ein Spreizdübel. Der Innendurchmesser des Dübels ist kleiner als der Kerndurchmesser der Schraube. Folge ist, dass die in den Dübel eingedrehte Schraube den Dübel auseinander spreizt. Um diese Funktion zu ermöglichen, ist der Dübel längs geschlitzt.

Eine neuere Entwicklung sind Nageldübel, auch als Schlagdübel bezeichnet, bei denen ein profilierter Nagel in die Kunststoffhülse des Dübels geschlagen wird.

Die Montage ist wesentlich einfacher als bei einem Schraubdübel, jedoch sind Nageldübel nicht so tragfähig wie die ursprünglichen Schraubendübel.

Da das umgebende Bohrloch die vom Dübel erreichte Spreizung begrenzt, wirkt der Dübel als Klemmvorrichtung zwischen Bohrloch und Schraube. Mit dessen Hilfe werden lösbare Schraubverbindungen speziell in Stein oder Beton - aber auch in sog. Trockenständerkonstruktionen - meist in Wänden, hergestellt.

Bei Metall-Spreizdübeln wird ebenfalls eine Klemmwirkung aktiviert. Dadurch bleibt der Dübel im Schlitz stecken. Sie wird erzeugt indem ein Konus in eine Spreizhülse eingetrieben wird. Die Hülse wird somit auseinandergedrückt. Metalldübel sind tragfähiger und sicherer als solche aus Kunststoff, da sie wesentlich höhere Spreizkräfte auf die Bohrlochwand übertragen können. Für Befestigungen an Decken, besonders für hohe Lasten, sind in Deutschland derzeit nur Spreizdübel aus Metall zugelassen, da bei Kunststoff die Gefahr des 'Fließens', des langsamen plastischen Verformens durch Auszugskräfte, besteht.

Neben den Verbundankern gibt es für Beton auch verschiedene bauaufsichtlich zugelassene Hinterschnittanker. Bei diesen wird ein Formschluss **dadurch erreicht, dass** durch einen Spezialbohrer das Bohrloch an seinem Grund aufgeweitet wird. Durch eine Keilkonstruktion o.ä. wird erreicht, dass der Hinterschnittanker dieses aufgeweitete Bohrloch vollständig ausfüllt. Hinterschnittanker werden meist für die Schwermontage verwendet. Sie tragen weitaus höhere Lasten als Spreizdübel, was teilweise mit dem erwähnten Formschluss zusammenhängt, aber auch damit, dass sie die Lasten weiter von der Oberfläche entfernt definiert einleiten. Es gibt auch Hinterschnittanker, die in der gerissenen Zugzone eines Betonbauteils verwendet werden dürfen.

Im Allgemeinen ist jedoch zu sagen, dass die meist gebräuchlichen, besonders von Heimwerkern, aber auch von Handwerkern verwendeten Dübel als Kunststoff-Spreizdübel ausgeführt sind und alle Spezialformen sowohl Mehrarbeit bei der Installation als auch Spezialwerkzeuge und die damit verbundene Investition sowie eine entsprechende Bevorratung erfordern und wesentlich teurer als die herkömmlichen Kunststoff-Spreizdübel sind. Darüber hinaus fordern sie je nach zu befestigendem Element eine Vorauswahl der zugeordneten Schraube, besonders die Länge dieser Schraube betreffend.

Der Erfindung liegt daher die Aufgabe zugrunde, einen Dübel der oben genannten Art anzugeben, der eine besonders hohe Spreiz- und Verankerungskraft im Bohrloch erreicht, kostengünstig herzustellen ist und die Verwendung von Gewindeschrauben, insbesondere Gewindestangen, mit einer an den Dübel und an das zu befestigende Element anzupassenden Länge ermöglicht.

Gewinde ist dabei definiert als eine profilierte Einkerbung mit vorgegebenen Abmessungen, dem sogenannten Gewindegang, der fortlaufend um eine zylinderförmige Wandung in einer gewundenen Schraubenlinie verläuft. Unterschieden wird hierbei in metrische und Zoll-Gewinde.

Diese Aufgabe wird erfindungsgemäß gelöst, indem
- der Dübelkörper eine Anzahl von Ausnehmungen mit einseitig angeordneten Spreizkrallen, die radial nach außen um die als Achse dienende Befestigung der Spreizkralle am Dübelkörper frei bewegbar sind, aufweist,
- der Innenkanal eine Anzahl von Gängen eines Innengewindes aufweist, die in Stärke, Höhe und Position der Ganghöhe einer zugeordneten Gewindeschraube oder eines Gewindestabes entsprechen,
- der Durchmesser des Innenkanals an den Durchmesser der zugeordneten Schraube oder des Gewindestabes angepasst ist,
- die Spreizkrallen auf ihrer Innenseite Verdickungen aufweisen.

Vorteilhafte Ausgestaltungen der Erfindung sind Gegenstand der Unteransprüche.

Die Erfindung geht von der Überlegung aus, dass die Nachteile eines aus Kunststoff hergestellten, mittels einer Schraube oder eines Nagels gespreizten Spreizdübels bei konsequenter Ausführung mit ausreichend dimensionierten und gespreizten Spreizelementen vermieden werden können. Um eine besonders große Fläche für die Erzeugung eines Spreizdrucks auf den Innenkanal eines Spreizdübels und weiterhin eine besonders flexible Anpassung an die zur Befestigung von beispielsweise Lasten notwendige Länge der Befestigungsschraube zu ermöglichen, sollte der Innenkanal zur Aufnahme einer Gewindeschraube oder einer Gewindestange ausgelegt sein.

Um eine besonders hohe Spreizkraft auf die Wände des Bohrlochs übertragen zu können, sind die Spreizkrallen vorteilhafterweise derart angeordnet, dass sie sich paarweise einander gegenüber liegen.

Damit der Dübel sich selbsttätig im Bohrloch ausrichtet und die Übertragung einer besonders hohen und gleichmäßig verteilten Spreizkraft auf die Wände des Bohrlochs erreicht wird, sind in Längsrichtung des Dübelkörpers gesehen die aufeinanderfolgenden Spreizkrallen, die auf gleicher Höhe paarweise einander gegenüberliegend angeordnet sind, zweckmäßigerweise um 90 Grad zueinander verdreht angeordnet.

Um eine Verankerung nicht nur an den Wänden des Bohrlochs, sondern auch an der Spitze des Dübelkörpers und somit eine besonders hohe Zugbelastung durch angeschraubte Lasten zu ermöglichen, weist diese vorteilhafterweise ebenfalls mehrere Spreizkrallen auf.

Um ein versehentliches Einschieben oder Versenken des Dübels in das Bohrloch wirkungsvoll zu verhindern, weist der Dübel an seiner Öffnung zur Aufnahme der Schraube oder der Gewindestange zweckmäßigerweise einen Anschlagrand auf.

Um ein Einschrauben des Kopfes der Gewindeschraube oder eines Anschlags auf der Gewindestange, beispielsweise eine Hutmutter oder ein System aus Kontermuttern, in das Bohrloch und somit eine Beschädigung der das Bohrloch umgebenden Wand zu vermeiden, weist der Anschlagrand des Dübels vorteilhafterweise eine Verstärkung auf.

Um eine besonders hohe Verankerung des Dübels im Bohrloch und somit eine besonders hohe Zugbelastung zu ermöglichen, weist der Innenkanal vorteilhafterweise ein durchgängiges Innengewinde oder mindestens einzelne Gewindegänge oder Teile derselben auf, die in der Steigung der zugeordneten Schraube oder Gewindestange, auch in einer denkbaren Ausführung als Feingewinde entsprechen und diese zuverlässig aufnehmen.

Damit der Dübel sich selbsttätig im Bohrloch ausrichtet und die Übertragung einer besonders hohen und gleichmäßig verteilten Spreizkraft auf die Wände des Bohrlochs sowie eine besonders starke Verankerung des Dübels im Bohrloch gegen Zugkräfte erreicht wird, weist der Dübelkörper an seiner Außenseite vorteilhafterweise eine im Wesentlichen durchgängige Anordnung von Krallen auf.

Die mit der Erfindung erzielten Vorteile bestehen insbesondere darin, dass ein kostengünstig zu fertigender Dübel beim Einschrauben oder Einschieben einer Gewindeschraube oder eines Gewindestabes einen besonders hohen Anpressdruck an die Wände des Bohrlochs überträgt und dadurch eine hohe Zugkraft der angehängten Last und zudem eine flexible Anpassung der Länge der Gewindeschraube oder der Gewindestange an die Anforderung ermöglicht.

Ein Ausführungsbeispiel der Erfindung wird anhand einer Zeichnung näher erläutert. Darin zeigen:
- Fig. 1.: einen Dübel in seitlicher Ansicht,
- Fig. 2.: einen Dübel mit eingeschraubter Gewindestange in dreidimensionaler Ansicht,
- Fig. 3: den offengelegten Innenkanal eines Dübels mit eingeschraubter Gewindestange im Schnitt, und
- Fig. 4: die Spitze des Dübels in Draufsicht.

Gleiche Teile sind in allen Figuren mit denselben Bezugszeichen versehen.

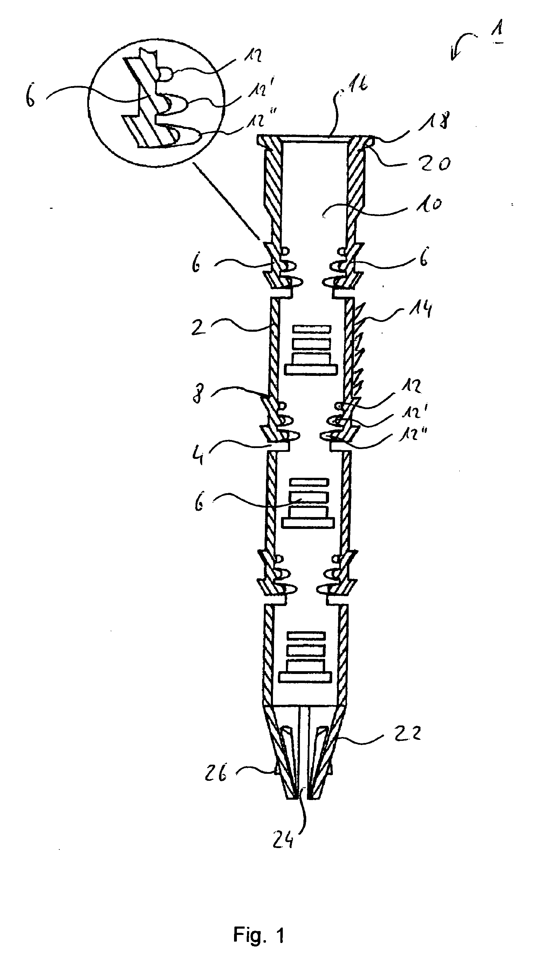

In der Fig. 1 wird ein Dübel 1 gezeigt, dessen Dübelkörper 2 im Wesentlichen als Hohlzylinder ausgebildet ist. In diesem Dübelkörper 2 sind Ausnehmungen 4 vorgesehen, in denen Spreizkrallen 6 um eine gedachte Achse 8, deren Mittelpunkt in vorteilhafter Ausführung an der Verbindungsstelle zwischen Dübelkörper 2 und Spreizkralle 6 angeordnet ist, nach außen schwenkbar gelagert sind.

Um diese Schwenkung nach außen zu erzeugen, ist in den Dübel 1 eine hier nicht dargestellte Schraube oder Gewindestange einzuschrauben oder einzuschieben. Diese ist derart ausgelegt, dass sie den Innenkanal 10 des Dübelkörpers 2 vollständig oder nahezu vollständig ausfüllt. Die Spreizkrallen 6 weisen auf ihrer inneren, dem Innenkanal 10 zugewandten Seite Verdickungen 12, 12' und 12" auf. Diese Verdickungen 12, 12' und 12" sind derart ausgelegt, dass sie einem der Schraube oder der Gewindestange zugeordneten Teil eines Gewindeganges darstellen, wobei dieses Gewinde als Feingewinde ausgelegt sein kann.

Die Verdickungen 12, 12' und 12" nehmen in Einschraubrichtung der Schraube oder Gewindestange zu, so dass die Spreizkrallen 6 durch weiteres Einschrauben oder Einschieben der Schraube oder Gewindestange kontinuierlich nach außen geschwenkt werden. Um einen durch diese Schwenkung zu erzeugenden Halt im Bohrloch zu erzielen, sind die Spreizkrallen 6 paarweise einander gegenüberliegend angeordnet.

Um einen besonders festen Halt des Dübels 1 im Bohrloch, besonders gegen Zugkräfte, zu erreichen, sind an der Außenseite des Dübelkörpers 2 optional Zähne 14 einer Verzahnung angeordnet, die sich auf Teilbereiche des Dübels 1 oder auf die gesamte Länge des Dübels 1 mit Ausnahme der Ausnehmungen 4 erstrecken, wobei die Ausrichtung der Zähne 14 der Verzahnung gegen die Zugrichtung des Dübels 1 aus dem Bohrloch gerichtet ist.

Der Dübelkörper 2 weist an der Einschrauböffnung 16 für die Gewindeschraube oder den Gewindestab einen Anschlagrand 18 auf, der ein versehentliches Einschieben des Dübels 1 in das Bohrloch über das vorgegebene und sinnvolle Maß hinaus wirkungsvoll verhindert. Dazu ist der Außendurchmesser des Anschlagrandes 18 größer als der Außendurchmesser des Dübelkörpers 2 und somit größer als der Innendurchmesser des Bohrlochs ausgeführt, so dass ein Einschieben des Dübels 1 in das Bohrloch nur bis zum Anschlagrand 18 erfolgen kann.

Dieser Anschlagrand 18 weist eine Verstärkung 20 auf, um ein Einschrauben des Kopfes der Gewindeschraube oder des Gewindestabes mit einer vorgesehenen Einschraubhilfe, beispielsweise zwei auf den Gewindestab geschraubte, gegeneinander gekonterte Muttern oder eine sogenannte Hutmutter, also eine Mutter mit einer Einschraubbegrenzung, in den Anschlagrand 18 und somit eine Beschädigung der das Bohrloch umgebenden Wand und/oder des Anschlagrandes 18 zu verhindern.

Die Spitze 22 des Dübels 1 ist geschlitzt derart ausgeführt, dass die jeweils durch einen Schlitz 24 voneinander getrennten Elemente 26 der Spitze 22 durch das Einschrauben oder Einschieben der Gewindeschraube oder der Gewindestange durch den Innenkanal 10 der Spitze 22 nach außen gedrückt werden.

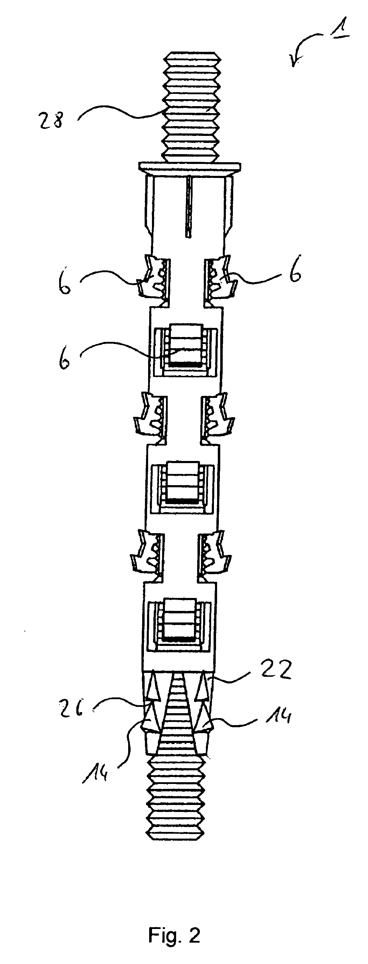

Die Fig. 2 zeigt den Dübel in dreidimensionaler Ansicht von außen mit einer eingeschraubten Gewindestange 28, die den Innenkanal 10 vollständig ausfüllt und die Spreizkrallen 6 nach außen schwenkt, wodurch die Zentrierung sowie der Halt des Dübels 1 im Bohrloch, besonders gegen Zugkräfte, erzeugt wird. Die Gewindestange 28 spreizt ebenfalls die Spitze 22 des Dübels 1, wodurch eine weitere Verankerung des Dübels 1 im Bohrloch erreichbar ist. Die einzelnen Elemente 26 der Spitze 22 können optional Zähne 14 aufweisen, die für einen besseren Halt in dem sie umgebenden Material des Bohrlochs sorgen.

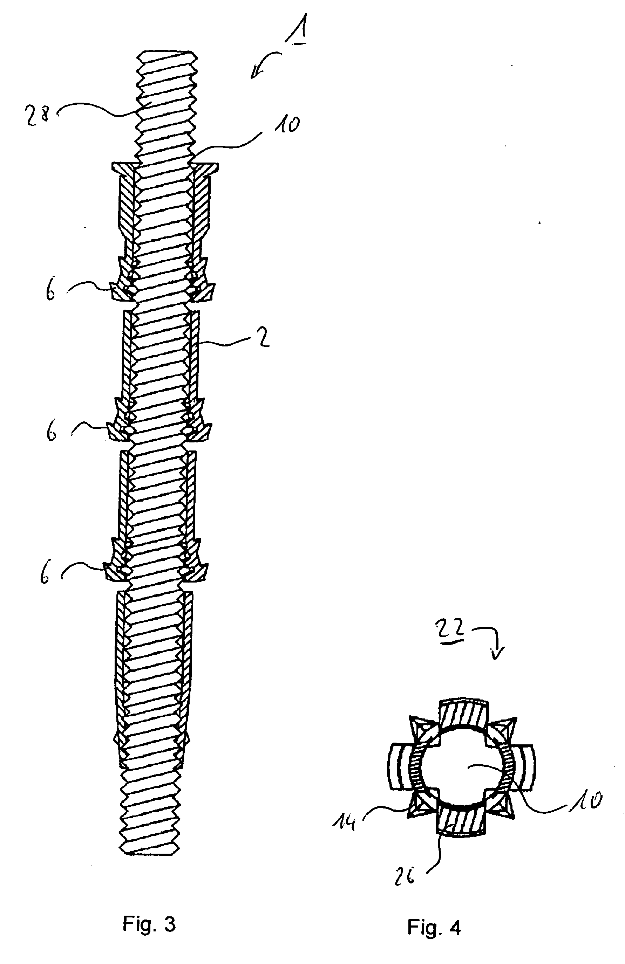

Im Gegensatz zur Fig. 2 zeigt die Fig. 3 den Schnitt durch den Dübel 1 mit einer eingeschraubten Gewindestange 28, die den Innenkanal 10 des Dübelkörpers 2 vollständig ausfüllt. Dadurch, dass die Gewindestange 28 den Innenkanal 10 vollständig ausfüllt, sind alle Spreizkrallen 6 nach außen geschwenkt. Die Verdickungen 12, 12' und 12" sind derart ausgelegt, dass sie Teile eines der Gewindeschraube oder dem Gewindestab 28 zugeordneten Gewindeganges aufweisen und ein Einschrauben des Gewindes, also der profilierten Einkerbung, die fortlaufend in einer gewunden Schraubenlinie um die zylinderförmige Wandung der Gewindeschraube oder des Gewindestabes verläuft, ermöglichen.

Die Spitze 22 ist in dieser Darstellung ebenfalls vollständig von dem Gewindestab 28 durchdrungen, so dass die Elemente 26 der Spitze 22 nach außen gedrückt werden.

Die Spitze 22 zeigt die Fig. 4 in Draufsicht. In dieser Darstellung ist die vollständige Durchdringung des Innenkanals 10 mit einer hier nicht dargestellten Gewindeschraube oder Gewindestange 28 vorausgesetzt, wobei alle Elemente 26 mit den Zähnen 14 der Spitze 22 nach außen gedrückt sind.

### Bezugszeichenliste

1 Dübel
2 Dübelkörper
4 Ausnehmung
6 Spreizkralle
8 Schwenkachse
10 Innenkanal
12 Verdickung
12' Verdickung
12" Verdickung
14 Verzahnung
16 Einschrauböffnung
18 Anschlagrand
20 Verstärkung
22 Spitze
24 Schlitz
26 Spitzenelement
28 Gewindestange

## Patentansprüche

1. Dübel mit einem im Wesentlichen als Zylinder ausgebildeten Dübelkörper mit einem Innenkanal,
**dadurch gekennzeichnet, dass**
- der Dübelkörper eine Anzahl von Ausnehmungen mit einseitig angeordneten Spreizkrallen, die radial nach außen um die als Achse dienende Befestigung der Spreizkralle am Dübelkörper frei bewegbar sind, aufweist,
- der Innenkanal eine Anzahl oder Teile von Gewindegängen aufweist, die in Größe und Position der Ganghöhe einer zugeordneten Gewindeschraube oder eines zugeordneten Gewindestabes entsprechen,
- der Durchmesser des Innenkanals an den Durchmesser der zugeordneten Schraube oder des zugeordneten Gewindestabes angepasst ist,
- die Spreizkrallen auf ihrer Innenseite Verdickungen aufweisen.

2. Dübel nach Anspruch 1, **dadurch gekennzeichnet, dass** die Spreizkrallen am Dübelkörper paarweise einander gegenüberliegend angeordnet sind.

3. Dübel nach Anspruch 1 oder 2, **dadurch gekennzeichnet, dass** in Längsrichtung des Dübelkörpers gesehen aufeinanderfolgende Spreizkrallen bezüglich der Längsachse um 90 Grad zueinander verdreht angeordnet sind.

4. Dübel nach einem der Ansprüche 1 bis 3, **dadurch gekennzeichnet, dass** die Spitze des Dübels mehrere Spreizkrallen aufweist.

5. Dübel nach einem der Ansprüche 1 bis 4, **dadurch gekennzeichnet, dass** die Öffnung zur Aufnahme der Schraube oder Gewindestange einen Anschlagrand aufweist.

6. Dübel nach Anspruch 5, **dadurch gekennzeichnet, dass** der Anschlagrand eine Verstärkung aufweist.

7. Dübel nach einem der Ansprüche 1 bis 6, **dadurch gekennzeichnet, dass** der Innenkanal im Wesentlichen ein durchgängiges Innengewinde aufweist, das in der Steigung der zugeordneten Schraube oder zugeordneten Gewindestange entspricht.

8. Dübel nach einem der Ansprüche 1 bis 6, **dadurch gekennzeichnet, dass** der Innenkanal einzelne Gewindegänge oder Teile derselben aufweist, die in der Steigung der zugeordneten Schraube oder zugeordneten Gewindestange entsprechen.

9. Dübel nach einem der Ansprüche 1 bis 8, **dadurch gekennzeichnet, dass** der Dübelkörper an seiner Außenseite eine im Wesentlichen durchgängige Anordnung von Krallen aufweist.
